(19) Europäisches Patentamt
European Patent Office
Office européen des brevets

(11) **EP 4 560 865 A1**

(12) **EUROPEAN PATENT APPLICATION**

(43) Date of publication:
**28.05.2025 Bulletin 2025/22**

(21) Application number: **23212133.5**

(22) Date of filing: **24.11.2023**

(51) International Patent Classification (IPC):
*H02J 3/26* (2006.01)        *H02J 3/36* (2006.01)
*H02J 3/38* (2006.01)        *H02J 3/40* (2006.01)
*H02M 7/493* (2007.01)

(52) Cooperative Patent Classification (CPC):
**H02J 3/36; H02J 3/26; H02J 3/381; H02J 3/40;
H02M 7/493**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **General Electric Technology GmbH
5400 Baden (CH)**

(72) Inventors:
• **JASIM, Omar**
  **ST16 1WS Stafford (GB)**
• **KUMAR, Amit**
  **ST16 1WS Stafford
  (GB)**
• **TOTTERDELL, Anthony**
  **ST16 1WS Stafford (GB)**

(74) Representative: **Openshaw & Co.
8 Castle Street
Farnham, Surrey GU9 7HR (GB)**

(54) **IMPROVEMENTS RELATING TO THE CONTROL OF BIPOLE POWER TRANSMISSION NETWORKS**

(57)     There is provided a computer-implemented method of controlling a bipole power transmission network, the bipole power transmission network comprising a first power conversion means comprising first and second power converters, a second power conversion means comprising third and fourth power converters, a first power transmission means electrically connected between the DC sides of the first and third power converters and defining a first electrical pole, a second power transmission means electrically connected between the DC sides of the second and fourth power converters and defining a second electrical pole, and a neutral arrangement, wherein the AC sides of the first and second power converters are electrically connected to respective AC networks via respective first and second AC buses, the method comprising:. synchronising a first AC bus voltage of the first AC bus with a second AC bus voltage of the second AC bus by: synchronising a first voltage-controlled oscillator (VCO) of the first power converter and a second VCO of the second power converter, with a third reference VCO, such that the first VCO and second VCO are synchronised with each other.

400

410

Figure 4

EP 4 560 865 A1

**Description**

Field

The subject matter herein relates generally to the field of power transmission networks and more specifically to the control of bipole power transmission networks.

Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e., the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e., power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

For a bipole HVDC power transmission network, the two poles of the bipole HVDC power transmission network can be fed through independent AC networks for e.g., wind power parks. The independent wind power parks may produce different power outputs owing to, for instance, differences in wind density in the vicinity of the wind power parks. This can result in an unbalanced power flow between the two poles causing a current, resulting from the unbalance, to flow through a neutral arrangement of the bipole power transmission network.

Summary

In bipole power transmission networks, particularly those connected to windfarms, the neutral arrangement typically comprises a dedicated metallic return conductor (DMR) for accommodating unbalanced current flow during normal operation of the bipole HVDC power transmission network. However, in case of a loss or fault of the DMR conductor, or indeed another fault condition arising with the neutral arrangement, the HVDC power transmission scheme may need to be switched to operate as a rigid bipole i.e., with one station grounded or with both stations grounded. In either rigid bipole mode, unbalanced current is not able to flow through the neutral arrangement (i.e., dedicated current return path) and so tends to flow to ground.

It is undesirable to have excessive unbalanced current flowing to ground at least from a safety perspective. For instance, excessive unbalanced current flowing to ground can cause voltage changes or differentials across the ground. Furthermore, excessive current flowing to ground may cause damage to electrical components in the ground path and can cause corrosion in any buried steel structure. Therefore, it tends to be necessary to minimise any current flowing to ground to below a threshold value, or ideally zero, and as quickly as possible. This requires a current balancing to be performed between the two poles of the bipole power transmission network.

In addition, in some scenarios, it may be necessary to initiate or startup a bipole power transmission scheme, in a rigid bipole configuration.

Furthermore and related, for a bipole power transmission network wherein two poles are fed from independent AC networks, a configuration transition sequence or a startup sequence would require both the AC networks to be synchronized and then connected to form a combined AC network, before the poles can be balanced, to avoid excessive ground current. Thus, it can be desirable to keep the power converters (particularly offshore converters) of bipole power transmission networks in a synchronization ready condition so that the subsequent synchronization of the AC networks connected to the power converters can be achieved as soon as possible.

Hence, there is a need to provide a control method, controller and bipole power transmission network, that mitigates these issues.

According to a first aspect of the invention, there is provided a computer-implemented method of controlling a bipole power transmission network, the bipole power transmission network comprising a first power conversion means comprising first and second power converters having respective first and second alternating current (AC) sides and respective first and second direct current (DC) sides, a second power conversion means comprising third and fourth power converters having respective third and fourth AC sides and third and fourth DC sides, a first power transmission means electrically connected between the first and third DC sides and defining a first electrical pole, a second power transmission means electrically connected between the second and fourth DC sides and defining a second electrical pole, and a neutral arrangement electrically connected between the first, second, third and fourth DC sides, wherein the first and second AC sides of the first and second power converters are electrically connected to respective AC networks via respective first and second AC buses, the method comprising: synchronising a first AC bus voltage of the first AC bus with a second AC bus voltage of the second AC bus by: synchronising a first voltage-controlled oscillator (VCO) of the first power converter and a second VCO of the second power converter, with a third reference VCO, such that the first VCO and second VCO are synchronised with each other.

The inventors have realized that the synchronization requirements described herein can be achieved by synchronizing the VCOs of the first and second power converters with a third, independent VCO that serves as a reference. By synchronizing the first VCO to the third reference VCO, and then synchronizing also the second VCO to the third reference VCO, the first and second VCOs can thereby by synchronized with each other (at least in phase angle). This tends to enable the first and second AC bus voltages to be synchronized owing to the conditions for the integration of the first and second VCOs utilizing the instantaneous phase angle of the third reference VCO.

More specifically, the disclosure herein proposes a control method for operating a bipole power transmission network in a synchronized manner i.e., in a synchronised independent pole control mode which tends to be advantageous for e.g., during the transition of a bipole scheme to a bipole balanced mode of operation (i.e., a rigid bipole wherein the DC configuration changes from bipole with DMR to bipole without DMR).

Generally, power converters at the offshore side in power transmission networks that are interconnecting wind power parks, operate in a so called 'grid forming mode'. This means the power converters have the ability to set a voltage magnitude and frequency (hence also the phase angle) at the respective independent AC buses to which the power converters are electrically connected. The wind turbines of the wind power parks follow the voltage set by the power converters and adjust their voltage angle to deliver the power generated. The two power converters at the offshore side are normally connected to at least two independent AC buses separated by at least one interconnecting device such as a bus sectionaliser. The two electrical poles of the bipole power transmission network operate independently to transmit the power delivered at the AC buses to an onshore AC system. However, when the bipole power transmission network must operate in a rigid bipole mode (i.e., when the DMR of the neutral arrangement suffers a fault condition), the one of more bus sectionaliser may need to be closed to ensure the offshore power converters 'see' a single common AC bus from which to share power. Keeping the phase angle of the AC voltage of both electrical poles as close to each other as possible (i.e., synchronizing the poles) will provide less disturbance to the infeed power from the wind power park streams when the closing command is given to bus sectionalisers electrically separating the independent AC buses. This is because the buses were already ready to be synchronized. Moreover this can avoid significant current flows across the bus sectionaliser that arise from different AC bus voltages of the first and second AC buses. Overall this will lead to less disturbance in the infeed power. The invention disclosed herein tends to achieve this by synchronizing first and second VCOs of the first and second power converters to a third, independent reference VCO.

Also, the disclosure herein proposes to use the same control methods to operate a bipole scheme when transitioning from monopole to bipole with or without DMR when one of the electrical poles (i.e., positive or negative pole) was out of service for maintenance or was blocked because of fault. This tends to be achievable because the power converter at the offshore side tends to operate in the grid forming mode and has the ability to set a voltage magnitude and frequency (hence the phase angle) at the AC bus which will be synchronised to the active pole. The invention disclosed herein tends to enable this by synchronizing first and second VCOs of the first and second power converters to a third, independent reference VCO.

The inventors have realized that the control requirements herein described, tend to be achievable by using a virtual and central voltage-controlled oscillator (VCO) within the bipole control. The initial condition of each integral of the first and second VCOs of the respective first and second power converters (and hence, the first and second electrical poles) tends to use the instantaneous phase angle value of a third reference VCO (the virtual and central VCO). This allows synchronisation to be achieved smoothly (even if the AC bus sectionalisers are open).

Furthermore, when energizing the poles of a bipole power transmission network, it is typical to energise a first pole initially and then energise the second pole. The invention described herein tends to allow for energizing of the second pole at any time whilst still ensuring that it is synchronised to the first energised pole.

In some embodiments, the synchronising the first VCO and the second VCO with the third reference VCO comprises: synchronising the first and second VCOs to a reference signal output by the third reference VCO.

The reference signal serves essentially as a clock reference for the first and second VCOs to ensure they are synchronized to the third independent VCO. Hence the third reference VCO is not controlling the first and second VCOs or the first and second power converters per se. It is instead providing a reference against which the first and second VCOs can sync themselves. The reference signal may therefore comprise a signal that changes from 0 to $2\pi$ at a predetermined frequency (such as 50Hz).

In some embodiments, the synchronising the first VCO and the second VCO with the third reference VCO comprises: synchronising respective phase angles of the first and second VCOs with a phase angle of the third reference VCO.

By synchronizing the phase or phase angles of the first and second VCOs with the third reference VCO, a common phase angle is used. By keeping the phase angles as close together as possible tends to ensure a synchronization ready condition is maintained for when the bipole power transmission system needs to operate in a balanced bipole configuration (i.e., for when bus sectionalisers between the AC buses need to be closed).

The synchronizing of the first VCO and the second VCO may be performed once, for instance when starting up a bipole power transmission network in a balanced bipole configuration, or initially when transitioning to a balanced bipole configuration. In some embodiments, the synchronising the first VCO and the second VCO with the third reference VCO is performed a plurality of times. This has the advantage of allowing a resynchronization to be performed to mitigate the first and second VCOs wandering (in respect of their phase angles) relative to each other, over time. In some embodiments, the synchronising the first VCO and the second VCO with the third reference VCO is performed periodically or substantially continuously. This can effectively 'lock' the first VCO and second VCO to the third reference VCO.

Some embodiments further comprise: monitoring the synchronisation of the first and second VCOs with the third reference VCO; determining, based on the monitoring, whether the first and second VCOs are unsynchronised with the third reference VCO; and resynchronising, based on the determining, the first and second VCOs with the third reference VCO.

This provides a 'closed loop' resynchronization of the first and second VCOs with the third reference VCO. For instance, the phase angle of the first VCO and second VCO can be compared to that of the third reference VCO, to determine any differences. If the differences are greater than a predetermined value, for instance, the first and second VCOs can be controlled to use the instantaneous phase angle of the third reference VCO.

In some embodiments, the third reference VCO is a virtual (i.e., software based) VCO. This has the advantage of not requiring additional dedicated control hardware. Such embodiments differ from the conventional master-slave approach - in which a first VCO is directly synchronized with a second VCO (or vice-versa) - by providing a virtual VCO as an external VCO that runs in the background (i.e., is not associated with a converter) and provides a reference phase angle to the first and second VCOs (each associated with respective converters), without interfering with the operations of the first and second converters.

Whilst the disclosure herein relates to synchronizing the frequency and phase angles of AC voltages at two independent AC buses (i.e., bringing the AC voltages formed by the two poles to have the same phase angle), it can also be beneficial to provide voltage magnitude adjustment. In some embodiments, the synchronising the first AC bus voltage with the second AC bus voltage further comprises: synchronising the magnitudes of the first and second AC bus voltages, to thereby allow the operation of the bus sectionaliser.

Whilst in some scenarios, the magnitudes of the first and second AC bus voltages may be the same, this cannot be guaranteed. Having magnitudes of the respective AC buses that are unequal can lead to high inrush currents. The synchronizing of the magnitudes of the first and second AC bus voltages may be achieved by applying voltage magnitude adjustment to the first or second AC voltage output from the respective AC sides of the first and second power converters (i.e., at the valve winding side of the transformer/s coupling the power converters to the AC buses) such that the AC bus voltages (i.e., at the line winding side) are synchronized in magnitude.

Some embodiments further comprise, operating a bus sectionaliser that is separating the first and second AC buses, from a non-conducting state in which the first and second AC buses are not electrically connected, to a conducting state in which the first and second AC buses are electrically connected. The bus sectionaliser may be one or more bus sectionalisers. The control method for synchronization herein discussed is particularly advantageous in scenarios where the first and second AC buses are to be electrically connected, to form a common AC bus, by closing one or more bus sectionalisers. This is because the control methods described herein maintain a synchronization ready condition of the AC bus voltages. Without the AC bus voltages being synchronized, when the bus sectionaliser is closed, a voltage differential across the bus sectionaliser could cause undesirable current flow affecting infeed power from the AC network (i.e., wind farms) feeding the power transmission network. The invention as described herein provides a synchronization of the first and second AC bus voltages prior to closure of the bus sectionaliser (i.e., the AC buses are in a synchronization ready state).

According to a second aspect of the invention, there is provided a controller for controlling a bipole power transmission network, the controller comprising: a memory; and at least one processor; wherein the memory comprises computer-readable instructions which when executed by the at least one processor cause the controller to perform the method of the first aspect of the invention.

According to a third aspect of the invention, there is provided a bipole power transmission network comprising: a first power conversion means comprising: first and second power converters having respective first and second AC sides and respective first and second DC sides; a second power conversion means comprising: third and fourth power converters having respective third and fourth AC sides and third and fourth DC sides; a first power transmission means electrically connected between the first and third DC sides and defining a first electrical pole; a second power transmission means electrically connected between the second and fourth DC sides and defining a second electrical pole; a neutral arrangement electrically connected between the first, second, third and fourth DC sides; wherein the first and second AC sides of the first and second converters are electrically connected to respective AC networks via respective first and second AC buses; wherein the bipole power transmission network further comprises the controller of the second aspect of the invention.

In some embodiments the bipole power transmission network is a HVDC power transmission network. In some embodiments the AC networks are wind power generation networks.

According to a fourth aspect of the invention, there is provided a computer program comprising instructions which when executed by a processor of a controller for a bipole power transmission network, cause the controller to perform the method of the first aspect of the invention.

According to a fifth aspect of the invention, there is provided a non-transitory computer-readable storage medium comprising the computer program of the fourth aspect of the invention.

It will be appreciated that particular features of different aspects of the invention share the technical effects and benefits of corresponding features of other aspects of the invention. More specifically, the controller, bipole power transmission network, computer program, non-transitory computer-readable medium, share the technical effects and benefits of the computer-implemented method of the invention.

It will also be appreciated that the use of the terms "first" and "second", and the like, are merely intended to help distinguish between similar features and are not intended to indicate a relative importance of one feature over another, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

Brief description of the drawings

Embodiments of the invention will now be described by way of example only and with reference to the accompanying drawings, in which:

Figure 1 shows generically, an example of a power transmission network;
Figure 2 shows an embodiment of a controller for a bipole power transmission network, in accordance with aspects of the disclosure herein;
Figure 3A shows an embodiment of a bipole power transmission network, according to aspects of the disclosure herein;
Figure 3B shows an example of a virtual or central VCO for bipole control, in accordance with aspects of the disclosure herein;
Figure 3C shows an example of VCOs being synchronized to the output of a virtual or central VCO for bipole control, in accordance with aspects of the disclosure herein; and
Figure 4 shows an embodiment of a method of controlling a bipole power transmission network.

Detailed description

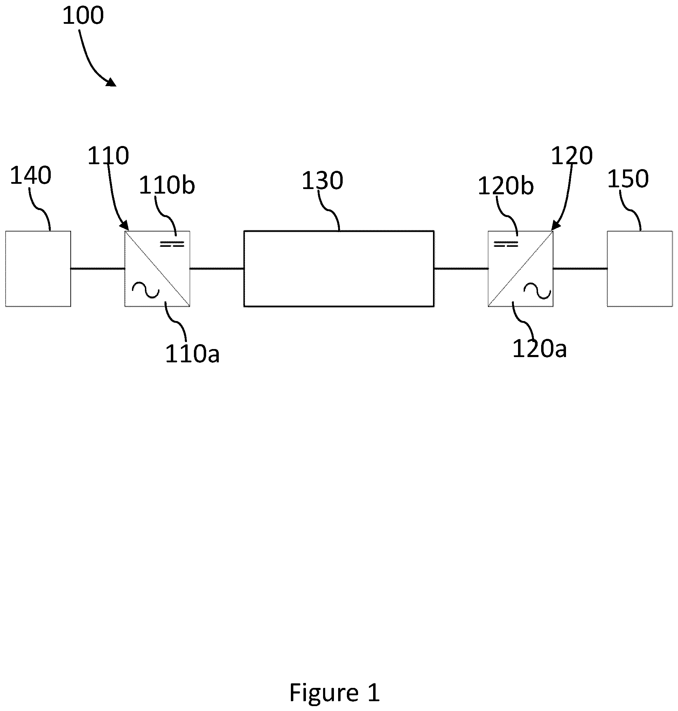

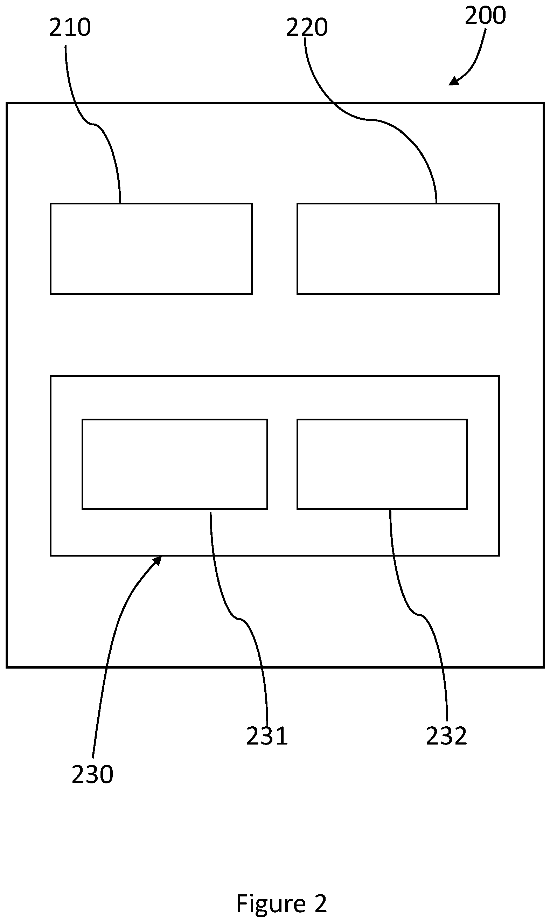

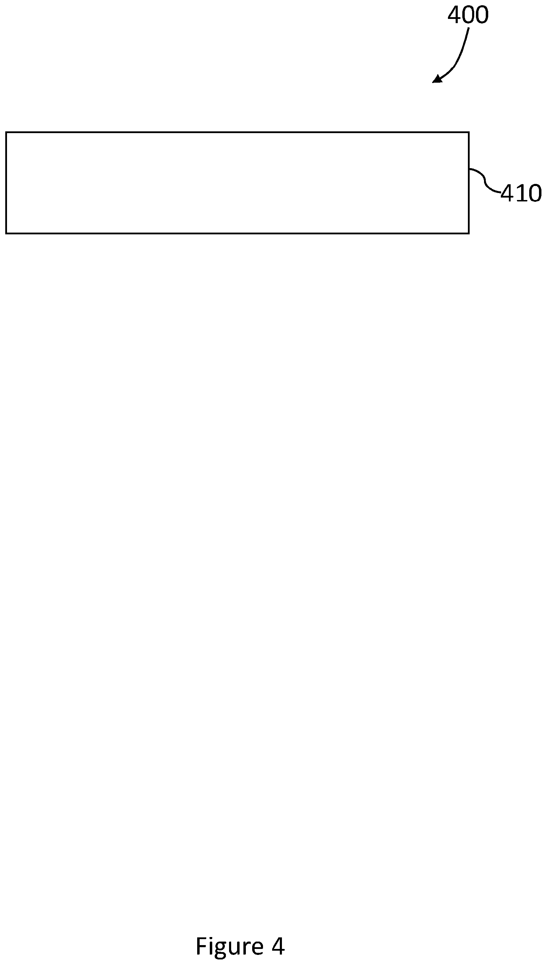

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the controller 200 of Figure 2, for instance. Furthermore, the method 400 of Figure 4 may be used in the network 100.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is illustrated as being connected to a first AC network 140. The first AC network 140 is illustrated as being connected to the first AC side 110a of the first power conversion means 110.

The second power conversion means 120 is illustrated as being connected to a second AC network 150. The second AC network 150 is illustrated as being connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance.

Also illustrated is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 120, 130.

The operation of the power transmission system 100 can be generically described as follows. The first AC power generation network 140 generates AC power that is provided to first power conversion means 110 at the first AC side 110a. The first power conversion means 110 converts the received AC power to a DC power for transmission to second power conversion means 120. The DC power is transmitted from first DC side 110b over the power transmission medium 130 to the second DC side 120b of second power conversion means 120. The second power conversion means 120 converts the received DC power back to an AC power. The AC power is then provided from second AC side 120a to second AC network 150 for consumption, for instance. In particular examples, the power conversion means 110 and 120 may be geographically remote. For instance, the first power conversion means 110 may reside with an off-shore wind farm and the second power conversion means 120 may reside on-shore.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in the idealistic scenario, only positive sequence voltage/current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the AC networks 140, 150.

The power transmission network 100 may be operated using methods such as grid forming control (GFM) wherein either or both of the power converters 110, 120 behave as three-phase, positive-phase sequence AC voltage sources behind an impedance, that regulate/control a magnitude, a phase angle, and a frequency of the AC voltage.

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means. The controller may be the controller 200 of Figure 2.

Figure 2 illustrates an embodiment of a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is illustrated as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may in certain embodiments be coupled to the transceiver 230.

The memory 210 may be a computer readable storage medium. For instance, the memory 210 may include a non-volatile computer storage medium. For example, the memory 210 may include a hard disk drive, flash memory etc.

Whilst not illustrated, the controller 200 may additionally include a user input device interface and/or a user output device interface, which may allow for visual, audible or haptic inputs/outputs. Examples include interfaces to electronic displays, touchscreens, keyboards, mice, speakers and microphones.

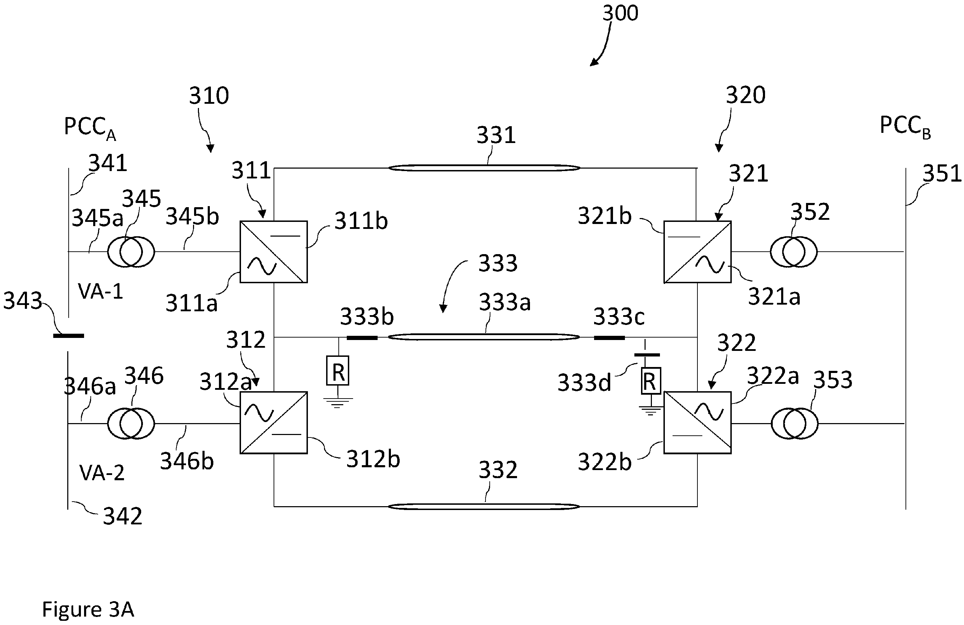

Figure 3A shows an embodiment of a bipole power transmission network 300 in normal operation.

The bipole power transmission network 300 comprises a first power conversion means 310 comprising first and second power converters 311, 312. The first power converter 311 has a first AC side 311a and a first DC side 311b. The second power converter 312 has a second AC side 312a and a second DC side 312b.

The bipole power transmission network 300 also comprises a second power conversion means 320 comprising third and fourth power converters 321, 322. The third power converter 321 has a respective third AC side 321a and a third DC side 321b. The fourth power converter 322 has a respective fourth AC side 322a and fourth DC side 322b.

A first power transmission means 331 is electrically connected between the first and third DC sides 311b, 321b and defines a first electrical pole. The first power transmission means 331 is electrically connected to pole terminals of the DC sides 311b, 321b. A second power transmission means 332 is electrically connected between the second and fourth DC sides 312b, 322b and defines a second electrical pole. The second power transmission means 332 is electrically connected to pole terminals of the DC sides 312b, 322b.

A neutral arrangement 333 is electrically connected between the first, second, third and fourth DC sides 311b, 312b, 321b, 322b. The neutral arrangement 333 is electrically connected to a neutral terminal on the DC sides 311b, 312b, 321b, 322b. The neutral arrangement 333 comprises a DMR 333a with switchgear 333b, 333c, arranged either side of the DMR 333a for isolating the DMR 333a if required. The switchgear 333b, 333c are in the closed or conducting state. Also present on the neutral arrangement 333 is a grounding switch 333d. The grounding switch 333d may be considered to be located at the on-shore side of the power transmission network 300.

The first and second AC sides 311a, 312a, of the first and second converters 311, 312, are electrically connected to respective AC networks (not visible) via respective first and second AC buses 341, 342, the AC buses 341, 342 being electrically separated by at least one interconnecting device 343 configured in a non-conducting state. The AC networks are offshore windfarms. Hence, the first and second converters 311, 312 may be considered to be located at an offshore side of the power transmission network 300.

Also shown in the power transmission network 300 are transformers 345, 346 having respective line winding sides 345a, 346a and valve winding sides 345b, 346b.

The third and fourth converters 321, 322 are further shown as being connected, at the AC sides 321a, 322a, to a further AC bus 351 via transformers 352, 353. The further AC bus 351 is for connecting to a further AC network (not visible).

Points of common connection are illustrated as $PCC_A$ on the offshore side and $PCC_B$ on the onshore side, of the bipole power transmission network 300. The person skilled in the art would be familiar with other components illustrated in the network 300, such as points of measurement for current and voltage, resistors, ground points etc.

During normal operation of the bipole power transmission network 300, the first and second converters 311, 312 are fed AC power from independent windfarms/wind power parks that are connected to independent AC buses 341, 342. The AC buses 341, 342 are independent because the interconnecting device 343 (e.g., bus sectionaliser) is in an open or non-conducting state. The independent windfarms may produce AC power outputs that differ, depending on wind density in the vicinity of the respective windfarms. This can result in an unbalanced power flow between the first and second power transmission means 331, 332 (the two electrical poles). This causes an unbalanced current to flow through the neutral arrangement 333. More specifically, the unbalanced current flow flows through the DMR 333a of the neutral arrangement 333.

The invention described herein uses a third virtual or central voltage-controlled oscillator (VCO) within the control of a bipole power transmission network 300. The first and second VCOs (not visible) of the respective first and second power converters 311, 312 use the third, independent virtual or central VCO as a reference. More specifically, the initial condition of each integration of the first and second VCOs tends to use the instantaneous phase angle of the third virtual or central VCO, such that synchronization of the first and second VCOs can be achieved. This tends to keep the phase angles of voltages at the AC buses 341, 342 corresponding to both electrical poles of the network 300 as close as possible to each other, which tends to provide less disturbance to the infeed power from the power park streams when the closing command is given to the interconnecting device 343 as the buses 341, 342 were already ready to be synchronized. This will lead to less disturbance in the infeed power.

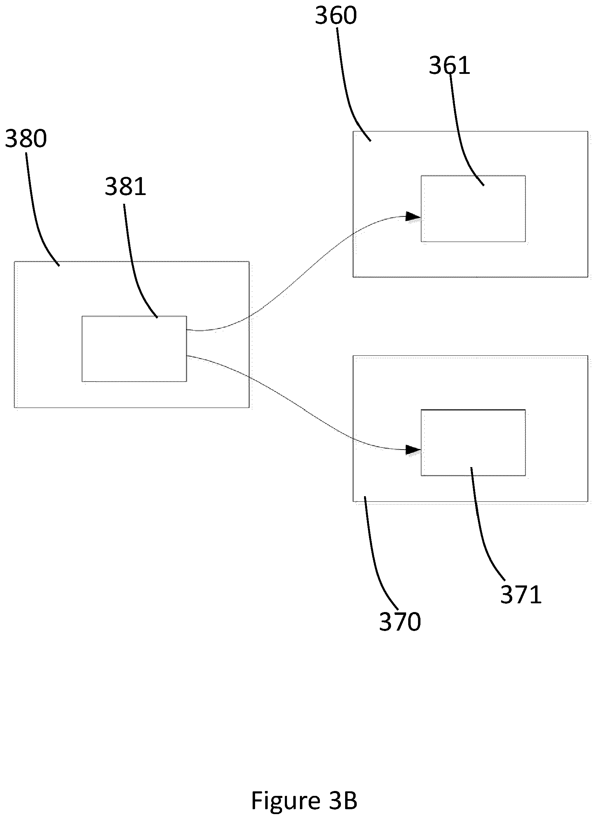

Figure 3B shows an example of a virtual or central VCO for bipole control, in accordance with aspects of the disclosure herein. As shown, the control 360 of the first power converter (i.e., power converter 311 in Figure 3A) uses a first VCO 361. Also shown, is that the control 370 of the second power converter (i.e., power converter 312 in Figure 3A) uses a second VCO 371. The control 380 of the bipole power transmission network (i.e., network 300 of Figure 3A) is shown as using a third, independent central VCO 381 which serves as a reference for the first VCO 361 and second VCO 371.

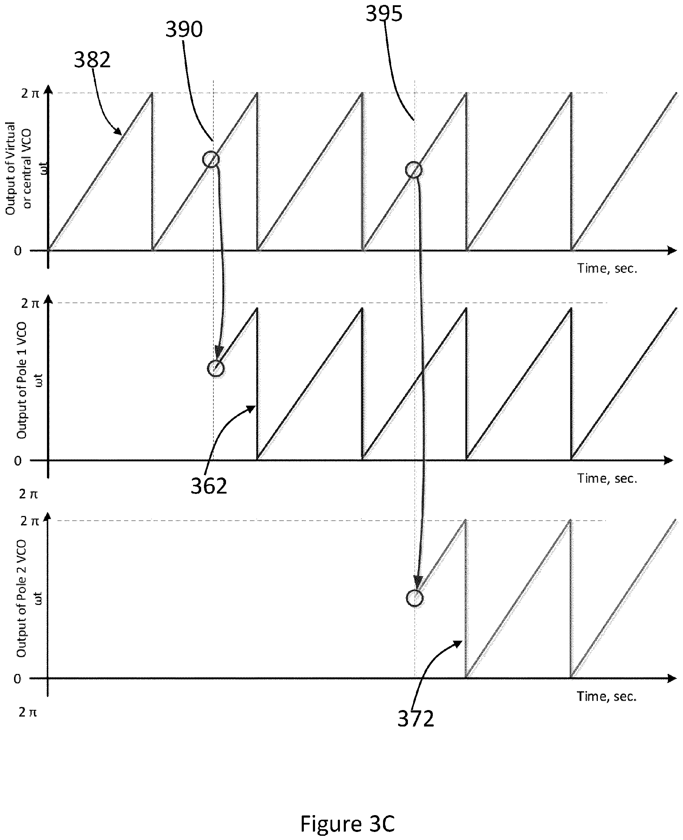

Figure 3C shows an example of VCOs being synchronized to the output of a virtual or central VCO for bipole control, in accordance with aspects of the disclosure herein. More specifically, a first output 362 of the first VCO 361 is shown. Furthermore, a second output 372 of the second VCO 371 is shown. Also shown is a third output 382 of third reference VCO 381. The outputs 362, 372, 382 show the phase of the respective VCOs 361, 371, 381 over time.

The third output 382 serves as a reference signal, periodically changing from 0 to $2\pi$ in a saw-tooth like manner.

The first output 362 is synchronized with the third output 382 at a first time 390 corresponding to the moment the first electrical pole of a bipole power transmission network 300 is energized. It can be seen that the first output 362 substantially instantaneously uses the instantaneous phase of the third output 382. The first output 362 then continues to provide an output that is synchronized to the third output 382.

The second output 372 is synchronized with the third output 382 at a second time 395 corresponding to the moment the second electrical pole of the bipole power transmission network 300 is energized. It can be seen that the second time 395 is later than the first time 390. It can also be seen that the second output 372 substantially instantaneously uses the instantaneous phase angle of the third output 382. The second output 372 then continues to provide an output that is synchronized to the third output 382.

Figure 4 shows an embodiment of a method 400 of controlling a bipole power transmission network 300.

A first step 410 comprises synchronising a first AC bus voltage of the first AC bus 341 with a second AC bus voltage of the second AC bus 342 by: synchronising a first VCO 361 of the first power converter 311 and a second VCO 371 of the second power converter 312, with a third reference VCO 381, such that the first VCO 361 and second VCO 371 are synchronised with each other.

The method 400 may be a computer implemented method operable by one of more processors of one or more controllers, such as the controller 200 of Figure 2. The method 400 may therefore be embodied as computer code, for instance in a non-transitory computer readable storage medium, separate to or as part of a controller 200.

The method 400 is particularly applicable to scenarios where a bipole power transmission network 300 is required to operate as a rigid bipole with power balancing.

The method 400 tends to ensure that when two electrical poles are connected to two separated AC buses, the voltage magnitude, frequency and phase angle for both electrical poles is synchronized (by keeping the magnitude and phase angle as close as possible to each other by having minimum difference between the magnitudes and phase angles). This can be expressed mathematically by Equations 1 and 2:

$$|V_{A-1}| = |V_{A-2}| \qquad\qquad\qquad \text{Equation 1}$$

$$Angle(V_{A-1}) = Angle(V_{A-2}) \qquad\qquad\qquad \text{Equation 2}$$

Wherein $V_{A-1}$, $V_{A-2}$, are the AC voltages of the AC buses as indicated in Figure 3A. Wherein $Angle(V_{A-1})$, $Angle(V_{A-2})$, are the phase angles of the AC voltages of the respective AC buses.

At least one of the converters 311, 312 of Figure 3A (i.e., the converters at the offshore side of the power transmission network 300) may operate in a grid forming mode. In the grid forming mode the converters 311, 312, provide constant AC voltage control to regulate AC voltage magnitude and frequency.

Whilst the embodiments described herein may refer to 'line winding side' and 'valve winding side', it will be understood that such terms are well known in the art. Regardless, such terms are used with reference to transformers connecting converters to respective AC buses. The line winding side is the side of the transformer that connects to the AC network feeding power to the AC bus. The valve winding side is the side of the transformer that connects to the power converters. By making AC voltage adjustments at the converter, a corresponding effect can be induced at the line winding side. It should be noted that the first and second AC bus voltages tend to be used interchangeably with line winding side voltage, and first and second AC voltages tend to be used interchangeably with valve winding side voltage.

As described herein, the third reference VCO or virtual or central VCO are referring to a VCO that is entirely separate to the VCOs feeding the power converter control. The third reference VCO is instead an independent VCO that provides a reference or 'clock' signal that other VCOs can watch and synchronise themselves to.

As described herein, it will be understood that 'synchronise' is intended to mean synchronizing at least phase angles, but may additionally include the synchronization of magnitude.

The invention described herein tends to have the advantage of enabling synchronization of VCOs of power converters to a separate and independent virtual or central VCO.

The invention described herein tends to have the advantage of synchronizing VCOs of power converters in anticipation of a requirement to operate a bipole power transmission network in a rigid bipole configuration with power balancing.

The invention described herein tends to enable the startup of a bipole power transmission network in a rigid bipole configuration.

The invention described herein tends to enable constant or intermittent operation of power converters in synchronization.

The invention described herein tends to have the advantage of providing less disturbance to the infeed power from wind power parks feeding a bipole power transmission network.

The invention described herein tends to have the advantage of allowing the faster synchronization of two converter AC buses, when power balancing of two converters is to be achieved, i.e. in the event of neutral conductor faults. This tends to be because the phase angles of the AC voltages at the AC buses are kept as close together as possible, meaning the buses are already synchronized when a closing command is given to a bus sectionaliser.

The invention described herein tends to have the advantage of providing a control method for operating a bipole scheme during a transition from a bipole scheme with a DMR to a bipole scheme without a DMR. The invention tends to allow for synchronization of phase angle before the transition.

The invention described herein tends to have the advantage of being applicable when operating a bipole scheme when transitioning from monopole to bipole (with or without a DMR).

The invention described herein tends to have the advantage of achieving a smoother synchronization even when a bus sectionaliser is open.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein also provides a voltage source converter (VSC) HVDC scheme. The scheme comprises a plurality of poles and a plurality of converters, the plurality of poles including at least one positive pole, at least one negative pole and a neutral pole. The scheme is normally configured in bipole with a return conductor in service. The two poles (positive and negative poles) are connected to independent AC buses and operated independently. Preferably, both the pole converters are in voltage/frequency control mode which defines the voltage and frequency reference of the AC network. A supplementary controller is programmed to maintain the synchronization ready condition of both the independent converter AC buses all the time, i.e., always maintain the voltage magnitude and phase angle of the two AC buses to be identical irrespective of power output of the two pole converters.

## Claims

1. A computer-implemented method of controlling a bipole power transmission network, the bipole power transmission network comprising a first power conversion means comprising first and second power converters having respective first and second alternating current 'AC' sides and respective first and second direct current 'DC' sides, a second power conversion means comprising third and fourth power converters having respective third and fourth AC sides and third and fourth DC sides, a first power transmission means electrically connected between the first and third DC sides and defining a first electrical pole, a second power transmission means electrically connected between the second and fourth DC sides and defining a second electrical pole, and a neutral arrangement electrically connected between the first, second, third and fourth DC sides, wherein the first and second AC sides of the first and second power converters are electrically connected to respective AC networks via respective first and second AC buses, the method comprising:
synchronising a first AC bus voltage of the first AC bus with a second AC bus voltage of the second AC bus by:
synchronising a first voltage-controlled oscillator 'VCO' of the first power converter and a second VCO of the second power converter, with a third reference VCO, such that the first VCO and second VCO are synchronised with each other.

2. The computer-implemented method of claim 1, wherein the synchronising the first VCO and the second VCO with the third reference VCO comprises:
synchronising the first and second VCOs to a reference signal output by the third reference VCO.

3. The computer-implemented method of any preceding claim, wherein the synchronising the first VCO and the second VCO with the third reference VCO comprises:
synchronising respective phase angles of the first and second VCOs with a phase angle of the third reference VCO.

4. The computer-implemented method of any preceding claim, wherein the synchronising the first VCO and the second VCO with the third reference VCO is performed a plurality of times.

5. The computer-implemented method of claim 4, wherein the synchronising the first and VCO and the second VCO with the third reference VCO is performed periodically or substantially continuously.

6. The computer-implemented method of claim 4, further comprising:

monitoring the synchronisation of the first and second VCOs with the third reference VCO;

determining, based on the monitoring, whether the first and second VCOs are unsynchronised with the third reference VCO; and

resynchronising, based on the determining, the first and second VCOs with the third reference VCO.

7. The computer-implemented method of any preceding claim, wherein the first and second power converters operate in an AC voltage and frequency control mode defining a reference voltage and frequency of the respective AC networks connected thereto.

8. The computer-implemented method of any preceding claim, wherein the third reference VCO is a virtual VCO.

9. A controller for controlling a bipole power transmission network, the controller comprising:

a memory; and

at least one processor;

wherein the memory comprises computer-readable instructions which when executed by the at least one processor cause the controller to perform the method of any preceding claim.

10. A bipole power transmission network comprising:

a first power conversion means comprising:

first and second power converters having respective first and second AC sides and respective first and second DC sides;

a second power conversion means comprising:

third and fourth power converters having respective third and fourth AC sides and third and fourth DC sides;

a first power transmission means electrically connected between the first and third DC sides and defining a first electrical pole;

a second power transmission means electrically connected between the second and fourth DC sides and defining a second electrical pole;

a neutral arrangement electrically connected between the first, second, third and fourth DC sides;

wherein the first and second AC sides of the first and second converters are electrically connected to respective AC networks via respective first and second AC buses;

wherein the bipole power transmission network further comprises the controller of claim 9.

11. The bipole power transmission network of claim 10, wherein:

the bipole power transmission network is a high voltage direct current 'HVDC' power transmission network; and/or

the AC networks are wind power generation networks.

100

140

110

110b

130

120b

120

150

110a

120a

Figure 1

Figure 2

Figure 3A

Figure 3B

Figure 3C

400

410

Figure 4

Europäisches
Patentamt

European
Patent Office

Office européen
des brevets

## EUROPEAN SEARCH REPORT

**Application Number**

EP 23 21 2133

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/082909 A1 (BARKER CARL [GB] ET AL) 16 March 2023 (2023-03-16) * paragraphs [0045] - [0084]; figure 1 * | 1-11 | INV. H02J3/26 H02J3/36 H02J3/38 |
| X | US 2023/223759 A1 (BABU NARAYANAN MITA [GB] ET AL) 13 July 2023 (2023-07-13) * paragraphs [0004], [0027], [0050] - [0080]; figures 1-3 * | 1-11 | H02J3/40 H02M7/493 |
| A | US 2023/318301 A1 (KUMAR AMIT [GB] ET AL) 5 October 2023 (2023-10-05) * figure 1 * | 1-11 | |

**TECHNICAL FIELDS SEARCHED (IPC)**

H02J
H02M

The present search report has been drawn up for all claims

| Place of search | Date of completion of the search | Examiner |
|---|---|---|
| Munich | 10 July 2024 | Telega, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2133

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2024

| Patent document cited in search report | | Publication date | Patent family member(s) | | Publication date |
|---|---|---|---|---|---|
| US 2023082909 | A1 | 16-03-2023 | CN 116137443 A | | 19-05-2023 |
| | | | EP 4184739 A1 | | 24-05-2023 |
| | | | US 2023082909 A1 | | 16-03-2023 |
| US 2023223759 | A1 | 13-07-2023 | CN 115552754 A | | 30-12-2022 |
| | | | EP 3913762 A1 | | 24-11-2021 |
| | | | US 2023223759 A1 | | 13-07-2023 |
| | | | WO 2021234145 A1 | | 25-11-2021 |
| US 2023318301 | A1 | 05-10-2023 | CN 116896105 A | | 17-10-2023 |
| | | | EP 4254706 A1 | | 04-10-2023 |
| | | | US 2023318301 A1 | | 05-10-2023 |

EPO FORM P0459

For more details about this annex : see Official Journal of the European Patent Office, No. 12/82